# EUROPÄISCHE PATENTANMELDUNG

(11) **EP 1 457 770 A1**
(43) Veröffentlichungstag der Anmeldung: **15.09.2004**
(21) Anmeldenummer: 04005775.4
(22) Anmeldetag: 11.03.2004
(51) Int. Cl.: G01N 21/954, G01B 11/30, G01B 11/24, G01V 8/12, G03B 37/00

(54) **Optische Prüfeinrichtung für Hohlkörper und Verfahren zur optischen Prüfung von Hohlkörpern**

(30) Priorität: 13.03.2003 DE 10311416
(71) Anmelder: Wente / Thiedig GmbH, D-38108 Braunschweig (DE)
(72) Erfinder: Thiedig, Ullrich, Dipl.-Ing., 38118 Braunschweig (DE); Köster, Bernd, Dr., 38162 Cremlingen (DE)
(74) Vertreter: Gerstein, Hans Joachim

(57) **Zusammenfassung**

Einer optischen Prüfeinrichtung (1) für Hohlkörper (2), insbesondere für Bohrungen mit Innengewinde (4) mit einer Ringleuchte (5) und einer Bilderfassungseinrichtung (6) hat die Bilderfassungseinrichtung (6) ein Weitwinkelobjektiv (7) mit einem kleineren Durchmesser als die Ringleuchte (5) zur vollständigen Abbildung des Hohlkörpers (2) auf einem Bildaufnehmer. Die Ringleuchte (5) umschließt das Weitwinkelobjektiv (7) konzentrisch und ist zur Ausleuchtung des ringförmigen Bereich am Umfang des Hohlkörpers (2) ausgebildet, wobei die optische Achse der Bilderfassungseinrichtung (6) und die Strahlrichtung der Ringleuchte (5) im Wesentlichen parallel zueinander und im Wesentlichen in die Erstreckungsrichtung des Hohlkörpers (2) ausrichtbar sind.

## Beschreibung

Die Erfindung betrifft eine optische Prüfeinrichtung für Hohlkörper, insbesondere für Bohrungen mit Innengewinde, mit einer Ringleuchte und einer Bilderfassungseinrichtung.

Die Erfindung betrifft weiterhin ein Verfahren zur optischen Prüfung von Hohlkörpern, insbesondere von Bohrungen mit Innengewinde mit einer solchen optischen Prüfeinrichtung.

Zur Qualitätskontrolle im Fertigungsprozess besteht ein Bedarf, Hohlräume, wie beispielsweise Innengewinde oder Innenmäntel von Zylindern etc. auf Fehler zu untersuchen. Dies erfolgt herkömmlicherweise manuell im Produktionsfluss für jedes Werkstück oder probenweise mit Hilfe einer visuellen Bewertung.

In der DE 197 38 827 C1 ist eine optische Prüfstation beschrieben, mit der Hohlkörper einer automatisierten Qualitätskontrolle unterzogen werden können. Hierbei ist ein Bildaufnahmesystem mit einer Lichtquelle zum Ausleuchten eines Zylinderinnenraums und ein Bilderfassungsgerät vorgesehen, das die Mantelinnenfläche des Zylinders aufnimmt. Die Mittelachse des Bilderfassungsgerätes und die Längsachse des Zylinders schneiden sich außerhalb des Zylinderinnenraums.

Damit können zwar Riefen in der Innenwandung erkannt werden. Die Ausleuchtung und Bilderfassung ist jedoch nicht so optimal, dass andere Fehler, wie beispielsweise Fehler eines Gewindegangs von Innengewinden, automatisch erkannt werden.

Aufgabe der Erfindung ist es daher, eine verbesserte optische Prüfeinrichtung für Hohlkörper zu schaffen.

Die Aufgabe wird mit der gattungsgemäßen optischen Prüfeinrichtung erfindungsgemäß dadurch gelöst, dass
- die Bilderfassungseinrichtung ein Weitwinkelobjektiv mit einem kleineren Durchmesser als die Ringleuchte zur vollständigen Abbildung des Hohlkörpers auf einem Bildaufnehmer hat, und
- die Ringleuchte das Weitwinkelobjektiv konzentrisch umschließt und zur Ausleuchtung des ringförmigen Bereiches am Umfang des Hohlkörpers ausgebildet ist, wobei
- die optische Achse der Bilderfassungseinrichtung und die Strahlrichtung der Ringleuchte im Wesentlichen parallel zueinander und im Wesentlichen in die Erstreckungsrichtung des Hohlkörpers ausrichtbar sind.

Im Unterschied zum Stand der Technik, bei dem die Ausleuchtung schräg in den Hohlkörper hinein erfolgt, ist erfindungsgemäß ein relativ steiler Einfallswinkel der Ringbeleuchtung vorgesehen, wobei das Weitwinkelobjektiv der Bilderfassungseinrichtung konzentrisch innerhalb des Umfangs der Ringleuchte angeordnet ist. Dadurch wird der Hohlkörper weit nach innen hinein gut angestrahlt und die Bilderfassungseinrichtung kann den Innenraum des Hohlkörpers relativ scharf und hell erfassen.

Insbesondere Innengewinde werden dann so ausgeleuchtet, dass die zur Ringleuchte und dem Weitwinkelobjektiv zeigenden Seiten der Flanken des Gewindes angestrahlt und ausgeleuchtet im Abbild sichtbar sind. Die von der Ringleuchte und dem Weitwinkelobjektiv abgewandten Seiten der Gewindegänge werfen hingegen einen Schatten, durch den der Übergang von einem Gewindegang zum nächsten sehr gut sichtbar hervorgehoben wird.

Vorzugsweise hat die Bilderfassungseinrichtung eine Triggereinheit zur Aufnahme oder Auswahl eines auszuwertenden Bildes des Hohlkörpers, wenn die optische Achse der Bilderfassungseinrichtung im Wesentlichen mit der Mittelachse des Hohlkörpers fluchtet. Die Bildaufnahme bzw. Auswertung eines aus einer Bildfolge aufgenommenen Bildes erfolgt somit nur dann, wenn sich Weitwinkelobjektiv und Ringleuchte konzentrisch über der Bohrung des Hohlkörpers befinden und somit eine gleichmäßige Ausleuchtung des Innenraums gewährleistet ist.

Die Ringleuchte hat vorzugsweise eine Vielzahl über einen Kreisumfang verteilt angeordnete und in Richtung des Hohlkörpers ausrichtbare Leuchtkörper. Diese Leuchtkörper sind vorzugsweise Leuchtdioden mit Weißlicht. Die Ringleuchte kann aber auch eine Vielzahl von über einen Kreisumfang angeordnete Lichtleitfasern haben, die zentral durch eine Lichtquelle gespeist werden und deren Enden so ausgerichtet sind, dass das austretende Licht parallel zur Achse des zu prüfenden Hohlraums strahlt.

Zur Parallelisierung des ausgestrahlten Lichts ist es vorteilhaft, wenn mindestens eine Vorsatzlinse vor die Ringleuchte gesetzt wird.

Das Weitwinkelobjektiv sollte einen rotationssymmetrisch krummen Verlauf der Linien gleicher Schärfe mit einer radial nach innen zunehmenden Brennweite haben. Damit kann die ungleiche Schärfe über die Gewindetiefe insbesondere für die Prüfung relativ tiefer Innengewinde kompensiert werden. Derartige Weitwinkelobjektive sind beispielsweise zum Einsatz für Rohrinspektionen bekannt.

Besonders vorteilhaft ist es, wenn ein Reflexionslichtempfänger im Bereich der Ringleuchte zum Empfangen von durch das Objekt mit dem Hohlkörper reflektiertem Licht vorgesehen ist. Der Reflexionslichtempfänger ist dabei mit der Triggereinheit verbunden und es erfolgt eine Bildaufnahme oder eine Bildauswertung genau dann, wenn der Reflexionslichtempfänger kein reflektierendes Licht empfängt, d. h. wenn sich die zu prüfende Bohrung genau unterhalb des Weitwinkelobjektivs befindet.

Der Reflexionslichtempfänger kann beispielsweise an einen oder mehrere Lichtleitfasern gekoppelt sein, die zusammen mit den zur Beleuchtung vorgesehenen Lichtleitfasern an dem Kreisumfang der Ringleuchte enden.

Zur Ausfilterung von direkten Reflexionen ist es vorteilhaft, mindestens einen Polarisationsfilter in der Bilderfassungseinrichtung vorzusehen.

Die Aufgabe wird weiterhin mit dem Verfahren zur optischen Prüfung von Hohlkörpern mit einer oben beschriebenen Prüfeinrichtung gelöst durch Ausleuchten des Hohlkörpers im Bereich des Umfangs des Hohlkörpers, wobei die Lichtstrahlen zur Ausleuchtung parallel zur Mittelachse des Hohlkörpers an einem etwas größeren Kreisumfang als der Umfang des Hohlkörpers ausgerichtet sind.

Die Erfindung wird nachfolgend anhand der beigefügten Zeichnungen näher erläutert. Es zeigen:
- Figur 1 -: Schematische Darstellung einer erfindungsgemäßen optischen Prüfeinrichtung;
- Figur 2 -: Kontrastinvers dargestellte Aufnahme eines Innengewindes mit einer optischen Prüfeinrichtung gemäß Figur 1.

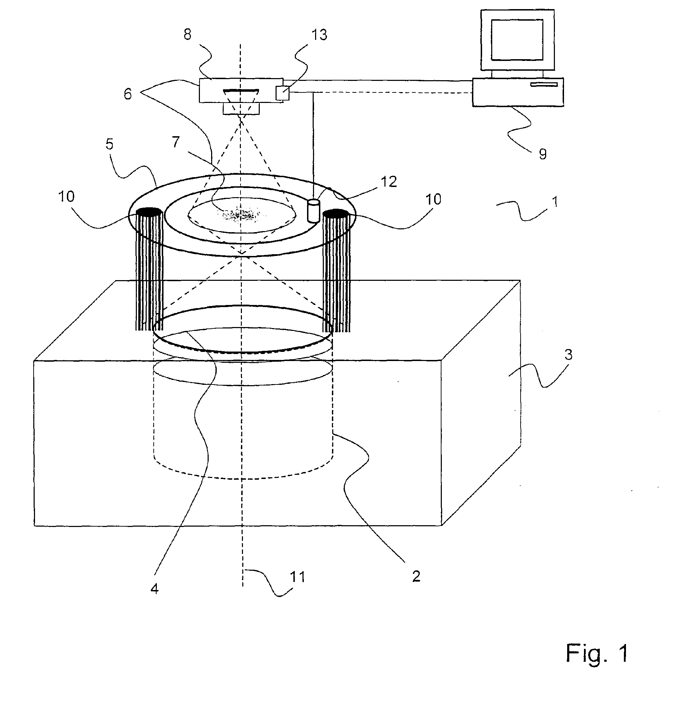

Die Figur 1 lässt eine Skizze einer optischen Prüfeinrichtung 1 für Hohlräume in einem Werkstück 3 erkennen. Der Hohlraum 2 hat in dem dargestellten Beispiel ein Innengewinde 4.

Die optische Prüfeinrichtung 1 ist oberhalb von dem Werkstück 3 angeordnet und hat im Wesentlichen eine Ringleuchte 5, eine Bilderfassungseinrichtung 6 mit einem Weitwinkelobjektiv 7 und einer Kamera 8 sowie eine Auswerteeinheit 9, vorzugsweise einen Computer.

Die Ringleuchte 5 hat eine Vielzahl gleichmäßig um den Kreisumfang der Ringleuchte 5 verteilt angeordnete Leuchtdioden 10, deren Lichtstrahlen im Wesentlichen parallel zur Mittelachse 11 des Hohlkörpers 2 ausgerichtet sind, d. h. die einen relativ steilen Einfallswinkel in den Hohlkörper 2 hinein haben. Der Umfang der Ringleuchte 5 ist so gewählt, dass der aktive Leuchtbereich geringfügig größer als der Durchmesser der zu prüfenden Bohrung ist und der ringförmige Bereich zwischen dem Weitwinkelobjektiv 7 und dem Innengewinde 4 gleichmäßig ausgeleuchtet wird.

Das Weitwinkelobjektiv 7 befindet sich konzentrisch in der Ringleuchte 5 und wird von dieser umschlossen. Das Weitwinkelobjektiv 7 hat einen kleineren Durchmesser als die zu untersuchende Bohrung und bildet das Innengewinde 4 komplett auf dem Bildaufnehmer der Kamera 8 ab. Hierfür kann beispielsweise ein Endoskop eingesetzt werden.

In der Ringleuchte 5 ist weiterhin ein Reflexionslichtempfänger 12 vorgesehen, der reflektiertes Licht von dem Werkstück 3 empfängt und mit einer Triggereinheit 13 in der Bilderfassungseinrichtung 6 und/oder der Auswerteeinheit 9 verbunden ist. Wenn die optische Achse der Bilderfassungseinrichtung 6 im Wesentlichen mit der Mittelachse des Hohlkörpers 2 fluchtet steht der Reflexionslichtempfänger 12 dann genau über dem Hohlkörper 2, so dass kein Licht mehr reflektiert wird. Dann wird die Triggereinheit 13 ausgelöst und ein Bild aufgenommen oder das aktuelle Bild einer kontinuierlich aufgenommenen Bildfolge zur Auswertung freigegeben.

Der Reflexionslichtempfänger 12 kann auch außerhalb der Ringleuchte 5 angeordnet sein. Hierbei kann beispielsweise mindestens eine Lichtleitfaser in der Ringleuchte 5 oder im Bereich zwischen der Ringleuchte 5 und dem Weitwinkelobjektiv 7 angeordnet werden, die zu einem außerhalb des Aufnahmebereich angeordneten Reflexionslichtempfängers 12 geführt ist.

In der Auswerteeinheit 9 werden dann die gewünschten Merkmale, wie Gewindesteigung, Vollständigkeit des Gewindeganges, Unverletztheit des Gewindeganges, Unterbrechungsfreiheit des Gewindeganges, Größe der Gewindeflanken, Späne im Hohlraum 2, Anzahl der Gewindegänge und Gewindetiefe etc. bestimmt. Das Prüfergebnis kann an eine nachfolgende nicht dargestellte Ausscheideeinheit für Gut- und Schlechtteile weitergegeben werden. Die Messergebnisse können zudem einer statistischen Verarbeitung zugeführt werden.

Die optische Prüfung kann im Produktionsfluss zu 100% an jedem Werkstück 3 oder statistisch erfolgen.

Zur Parallelisierung der Lichtstrahlen, die von der Ringleuchte 5 ausgestrahlt werden, kann eine nicht dargestellte ebenfalls ringförmige Vorsatzlinse vor der Ringleuchte 5 angeordnet sein.

Weiterhin kann mindestens ein Polarisationsfilter zur Ausfilterung direkter Reflexionen in der Bilderfassungseinrichtung 6 vorgesehen sein.

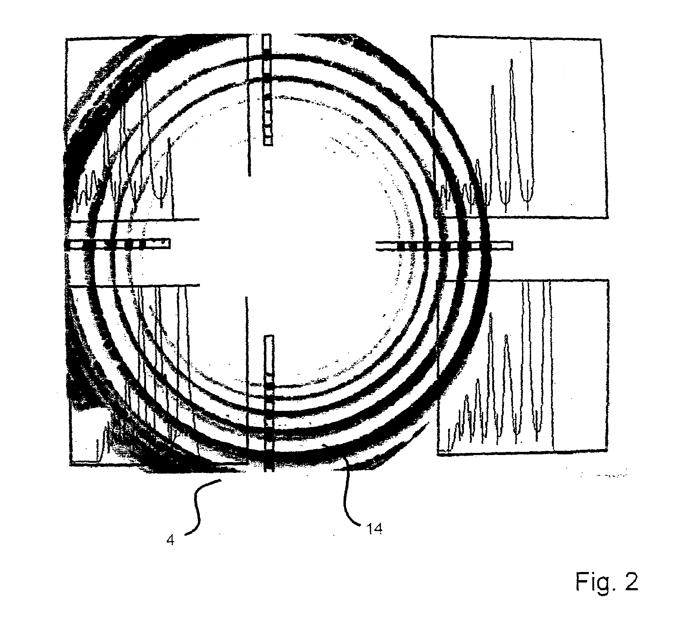

Die Figur 2 zeigt eine kontrastinvers dargestellte Aufnahme eines Innengewindes 4 mit der optischen Prüfeinrichtung 1 aus der Figur 1.

Es ist zu erkennen, dass durch den steilen Einfallswinkel der Ringbeleuchtung der Ringleuchte 5 die zum Weitwinkelobjektiv 7 zeigenden Seiten der Flanken 14 des Innengewindes 4 angestrahlt und gut ausgeleuchtet in der Abbildung sichtbar sind.

Die von dem Weitwinkelobjektiv 7 abgewandten Seiten der Gewindeflanken 14 werfen einen Schatten, so dass der Übergang von einem Gewindegang zum nächsten sehr gut sichtbar hervorgehoben wird.

Die ungleiche Schärfe über die Tiefe des Hohlraumes 2 kann insbesondere bei sehr tiefen Hohlräumen 2 bzw. Innengewinden 4 störend sein. Zur Kompensation können Spezialobjektive eingesetzt werden, wie sie beispielsweise für die Rohrinspektion genutzt werden. Die Spezialobjektive haben einen rotationssymmetrisch krummen Verlauf der Linien gleicher Schärfe, d. h. eine Brennweite, die über den Radius unterschiedlich ist und radial nach innen zunimmt.

## Patentansprüche

1. Optische Prüfeinrichtung (1) für Hohlkörper (2), insbesondere für Bohrungen mit Innengewinde (4), mit einer Ringleuchte (5) und einer Bilderfassungseinrichtung (6), **dadurch gekennzeichnet, dass**
- die Bilderfassungseinrichtung (6) ein Weitwinkelobjektiv (7) mit einem kleineren Durchmesser als die Ringleuchte (5) zur vollständigen Abbildung des Hohlkörpers (2) auf einem Bildaufnehmer hat, und
- die Ringleuchte (5) das Weitwinkelobjektiv (7) konzentrisch umschließt und zur Ausleuchtung des ringförmigen Bereiches am Umfang des Hohlkörpers (2) ausgebildet ist, wobei
- die optische Achse der Bilderfassungseinrichtung (6) und die Strahlrichtung der Ringleuchte (5) im Wesentlichen parallel zueinander und im Wesentlichen in die Erstreckungsrichtung des Hohlkörpers (2) ausrichtbar sind.

2. Optische Prüfeinrichtung (1) nach Anspruch 1, **dadurch gekennzeichnet, dass** die Bilderfassungseinrichtung (6) eine Triggereinheit (13) zur Aufnahme oder Auswahl eines auszuwertenden Bildes des Hohlkörpers (2) hat, wenn die optische Achse der Bilderfassungseinrichtung (6) im Wesentlichen mit der Mittelachse (11) des Hohlkörpers (2) fluchtet.

3. Optische Prüfeinrichtung (1) nach Anspruch 2, **dadurch gekennzeichnet, dass** die Ringleuchte (5) eine Vielzahl über einen Kreisumfang verteilt angeordnete und in Richtung des Hohlkörpers (2) ausrichtbare Leuchtkörper, insbesondere Leuchtdioden (10) hat.

4. Optische Prüfeinrichtung (1) nach einem der vorhergehenden Ansprüche, **dadurch gekennzeichnet, dass** das Weitwinkelobjektiv (7) einen rotationssymmetrisch krummen Verlauf der Linien gleicher Schärfe mit einer radial nach innen zunehmenden Brennweite hat.

5. Optische Prüfeinrichtung (1) nach einem der vorhergehenden Ansprüche, **dadurch gekennzeichnet, dass** die Ringleuchte (5) mindestens eine Vorsatzlinse zur Parallelisierung des ausgestrahlten Lichts hat.

6. Optische Prüfeinrichtung (1) nach einem der vorhergehenden Ansprüche, **dadurch gekennzeichnet, dass** die Ringleuchte (5) eine Vielzahl über einen Kreisumfang angeordnete Lichtleitfasern hat.

7. Optische Prüfeinrichtung (1) nach einem der vorhergehenden Ansprüche, **dadurch gekennzeichnet, dass** ein Reflexionslichtempfänger (12) im Bereich der Ringleuchte (5) zum Empfangen von durch das Werkstück (3) mit dem Hohlkörper (2) reflektiertem Licht vorgesehen ist, wobei der Reflexionslichtempfänger (12) mit der Triggereinheit (13) verbunden ist und eine Bildaufnahme oder Bildauswertung erfolgt, wenn der Reflexionslichtempfänger (12) kein reflektiertes Licht empfängt.

8. Optische Prüfeinrichtung (1) nach Anspruch 6 und 7, **dadurch gekennzeichnet, dass** der Reflexionslichtempfänger (12) an eine Lichtleitfaser gekoppelt ist, die zusammen mit den zur Beleuchtung vorgesehenen Lichtleitfasern an dem Kreisumfang der Ringleuchte (5) endet.

9. Optische Prüfeinrichtung (1) nach einem der vorhergehenden Ansprüche, **dadurch gekennzeichnet, dass** die Bilderfassungseinrichtung (6) mindestens einen Polarisationsfilter hat.

10. Verfahren zur optischen Prüfung von Hohlkörpern (2), insbesondere von Bohrungen mit Innengewinde (4), mit einer optischen Prüfeinrichtung (1) nach einem der vorhergehenden Ansprüche, **gekennzeichnet durch** Ausleuchten des Hohlkörpers (2) im Bereich des Umfangs des Hohlkörpers (2), wobei die Lichtstrahlen zur Ausleuchtung parallel zur Mittelachse (11) des Hohlkörpers (2) an einem etwas größeren Kreisumfang als der Umfang des Hohlkörpers (2) ausgerichtet sind.

11. Verfahren nach Anspruch 10 zur Prüfung von Innengewinden (4), **gekennzeichnet durch** Ausleuchten des Innengewindes (4) mit der Ringleuchte (5) derart, dass die der Ringleuchte (5) zugewandten Seiten der Flanken (14) des Innengewindes (4) angestrahlt werden und die von der Ringleuchte (5) abgewandten Seiten der Flanken (14) einen Schatten werfen.
